# EUROPEAN PATENT APPLICATION

(11) **EP 1 988 378 A1**
(43) Date of publication of application: **05.11.2008**
(21) Application number: 07107351.4
(22) Date of filing: 02.05.2007
(51) Int. Cl.: G01L 23/22

(54) **On-Cylinder Combustion Sensor**

(71) Applicant: Ford Global Technologies, LLC, Dearborn, MI 48126 (US)
(72) Inventor: Vantine, Katie, 52062, Aachen (DE); Chevalier, Alain, 4841, Henri-Chapelle (BE); Roettger, Daniel, 4731, Eynatten (BE); Tumelaire, Charles, 52076, Aachen (DE); Schmitt, Jürgen, 52074, Aachen (DE)
(74) Representative: Drömer, Hans-Carsten

(57) **Abstract**

The invention relates to an internal combustion engine having at least one engine component (2) mounted on an engine block and at least one combustion chamber, whereby a knock sensor (3), which generates a signal as a result of the combustion process in at least one of the combustion chambers, is mounted to the engine block.

It is an object of the invention to provide an internal combustion engine comprising of a knock sensor to affect an improved signal-to-noise ratio and reduced cross-coupling between the cylinders.

Inventional the knock sensor (3) is mounted directly over the combustion chamber such that a signal resulting from the combustion process transmitted through the engine block and via the knock sensor (3) is generated, so that the combustion in the at least one combustion chamber is measured indirectly.

## Description

The invention relates to an internal combustion engine having an engine component mounted on an engine block and at least one combustion chamber, whereby a knock sensor, which generates a signal as a result of the combustion process in at least one of the combustion chambers, is mounted to the engine block.

In recent years, internal combustion engines, for example diesel engines, have become more and more sophisticated in terms of refinement, power and emissions levels. These improvements were largely driven by regulatory requirements and customer expectations, and they could be offered through the combination of new generations of fuel injection systems coupled with advanced electronics and control systems. Both regulatory requirements (notably emissions levels) and customer expectations will continue to drive further sophistication of the internal combustion engine. This, in turn, requires development and application of more advanced electronics and control systems to ensure reliable, safe, and robust operation of the engine throughout its lifetime.

In particular, the application of cylinder-individual feedback control is expected to play a major role as an enabler for new combustion and aftertreatment technologies (for example, HCCI in diesel engines, just to name one), which will be necessary to meet future requirements. Additionally, the ability to monitor one engine bank or the engine as a whole with reduced number of sensors (relative to one-per-cylinder) can increase the engine robustness; in order to remain affordable and competitive cost-wise, low cost solutions to combustion sensing are seen as critical.

It is known from the state-of-the-art, that in-cylinder pressure sensors are integrated into the engine component, for example, into a glow plug of an diesel engine. These sensors measure the pressure in the cylinder, allowing calculations to directly characterize the combustion process and, therefore, control the engine. While different suppliers utilize different physical principles, the additive cost to the exemplary mentioned glow plugs for all current technologies can be prohibitive.

In-cylinder pressure sensors are integrated in a glow plug disclosed for example in the following: US20050199049 A1, US20060142930 A1, US20050252297 A1, US20050061063. Other approaches have the sensor exterior to the glow-plug.

As disclosed in US 6,411,038 B2 an installation structure of an engine component with a combustion pressure sensor in an engine having a combustion chamber is known. The combustion pressure sensor is mounted on the engine component for generating an output signal based on a force acting on the engine component responsive to combustion pressure of the combustion chamber. An installation hole is formed in the engine so as to penetrate from outside into the combustion chamber. An elastic member is positioned in the installation hole. The elastic member comprises of at least one separate body from the engine component and the engine, an integral part of the engine component and an integral part of the engine. The engine component is inserted into the installation hole and seals the combustion chamber via the elastic element to the engine, so that the engine component comes in pressurized contact with engine in an axial direction of the installation hole. Further, the elastic member is elastically more deformable in an axial direction of the installation hole than a portion of the engine component on which the combustion pressure sensor is mounted.

EP 1 162 442 B1 relates to a signal processing device for processing an output of a piezoelectric sensor to produce a signal indicative of a load to the piezoelectric sensor. The piezoelectric sensor is fixed as a combustion pressure sensor on the mounting surface of a glow plug. The combustion pressure sensor works to convert a load, acting on the piezoelectric elements arising from displacement or vibration of the glow plug and caused by the combustion pressure in the combustion chamber, into an electric signal. Additional electronics are required to convert the signal into a pressure signal output.

Both of the two above mentioned disclosures use a sensor with the output in the form of a cylinder pressure trace. The pressure output is used as an input to standard thermodynamic equations, such as heat release, used to model the combustion process.

Another approach to control the combustion process is to use knock sensors. They are typically mounted on specific bosses located on the cylinder head or the engine block, indirectly measuring the combustion process via the transmitted vibrations due to the combustion. Inherently, the sensor measures more than the combustion, i.e., there is always some noise on the signal due to resonance of various auxiliaries, etc., leading to a low signal-to-noise ratio with cross-coupling between the cylinders.

Therefore, it is an object of the invention to provide an internal combustion engine comprising a knock sensor to affect an improved signal-to-noise ratio and reduced cross-coupling between the cylinders.

According to the present invention this object is solved by an internal combustion engine having a knock sensor as set out in the independent claim 1, whereby the knock sensor is mounted directly over the combustion chamber such that a signal resulting from the combustion process transmitted through the engine block and via the knock sensor is generated, so that the combustion in the at least one combustion chamber is measured indirectly.

With the purposed invention a signal is provided that is indicative of the combustion process (not an "absolute" measurement), but still provides a handle for engine control at a lower cost.

Further advantageous developments of the invention are set out in the dependent claims.

The present invention will be understood more fully from the detailed description given herein below and from the accompanying drawings of the preferred embodiment of the invention, which, however, should not be taken to limit the invention to the specific embodiment, but are for the purpose of explanation and understanding only.

In the drawings:
- Fig. 1: is a cross sectional view which shows an internal combustion engine,
- Fig. 2: is a plot of the output of the knock sensor, and
- Fig.3: is a plot comparing signals of a knocking sensor located in a conventional position and that disclosed here and shown in Figure 2.

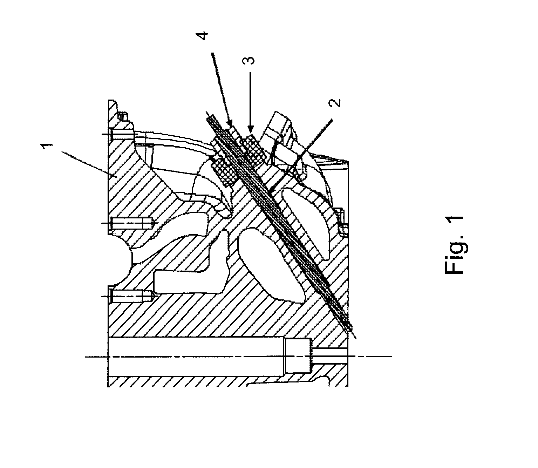

Figure 1 shows a cylinder head 1 of an engine block for an internal combustion engine, a diesel engine in the exemplary depiction. The cylinder head 1 comprises of at least one engine component, e.g. a glow plug 2, inserted into a corresponding hole of the cylinder head 1. A knock sensor 3 is mounted to the outer circumference of the at least one glow plug 2 using a nut 4. The nut 4 is used to mount the knock sensor 3 to the cylinder head 1 directly above and/or on the glow plug 2, and thus directly above the at least one combustion chamber, and to provide the necessary pre-load on the knock sensor 3.

The knock sensor 3 is mounted directly over the combustion chamber such that a signal, resulting from the combustion process transmitted through the engine block and cylinder head 1, is generated by knock sensor 3, measuring the combustion indirectly in the at least one combustion chamber.

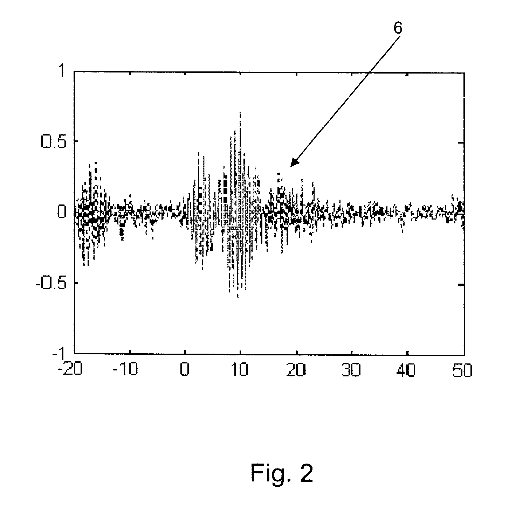

The knock sensor 3 has a raw output of an accelerometer (Figure 2, line 6). The combustion is characterized by using indices calculated by processing the accelerometer signal. Compared to the known state-of-the-art pressure sensors, the invention requires an algorithm that is not based on modeling the combustion, but via pure signal processing (e.g. filtering).

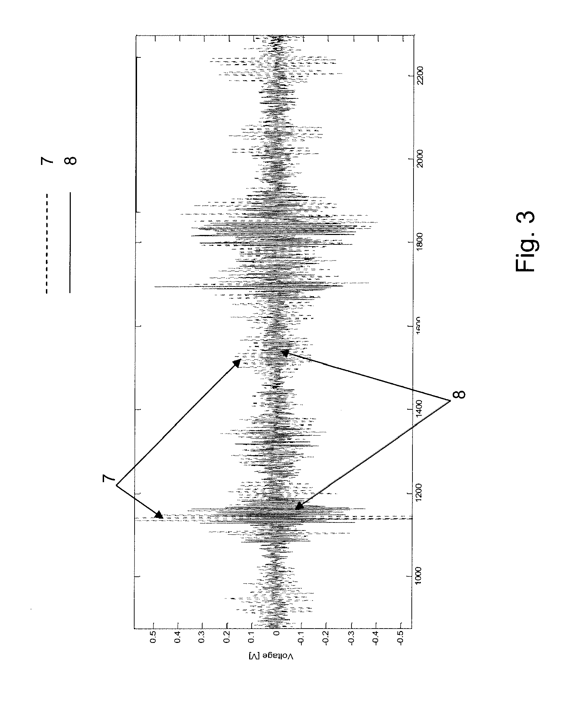

Since above mentioned knock sensor 3 is mounted directly over the combustion chamber, closer to the combustion process, via the glow plug 2 as opposed to mounting it somewhere on the engine as in the known state-of-the-art knock sensors, there is potential improvement in the signal-to-noise ratio. This not only reduces the amount of noise on the signal, but also reduces the signal processing required to obtain a useful measure of the combustion. As one can see in Figure 3, the knock sensor as mounted on the engine block for the state-of-the-art has much more noise on the signal (line 7) relative to the signal of the knock sensor 3 (line 8). The signal (line 8) of the knock sensor 3 for the purposed invention is much cleaner and the combustion is less disguised by other sources. With the invention an on-cylinder combustion sensor is provided in the kind of a knock sensor.

One of the advantages is that the knock sensor 3 and the glow plug 2 are two separate mass-produced parts possibly from different manufactures; the required modification of the glow-plug 2 is minimized and can be chosen independently to suit the application. An off-the-shelf knock sensor and its standard output can be used. This has a further and additional benefit in maintenance compared to a combustion sensor integrated in the glow plug: only the glow-plug 2 or the knock sensor 3 need to be replaced should one of these two components fail during the lifetime of the vehicle.

Of course, the exemplary embodiment is not limited to a diesel engine as well as to a glow plug. Although not described in the invention disclosed here, it can apply equally to other internal combustion engines with other engine components or devices.

## Claims

1. Internal combustion engine having at least one engine component (2) mounted on an engine block and at least one combustion chamber, whereby a knock sensor (3), which generates a signal as a result of the combustion process in at least one of the combustion chambers, is mounted to the engine block, **characterized in, that** the knock sensor (3) is mounted directly over the combustion chamber such that a signal resulting from the combustion process transmitted through the engine block and via the knock sensor (3) is generated, so that the combustion in the at least one combustion chamber is measured indirectly.

2. Internal combustion engine as set forth in claim 1, **characterized in, that** the knock sensor (3) is mounted directly above the at least one engine component (2).

3. Internal combustion engine as set forth in claim 1 or 2, **characterized in, that** the knock sensor (3) has a raw output of an accelerometer.

4. Internal combustion engine as set forth in one of the preceding claims, that the knock sensor (3) and the engine component (2) are two separate parts.
